# EUROPÄISCHE PATENTANMELDUNG

(11) **EP 3 467 293 A2**
(43) Veröffentlichungstag der Anmeldung: **10.04.2019**
(21) Anmeldenummer: 18199057.3
(22) Anmeldetag: 08.10.2018
(51) Int. Cl.: F02M 25/022, B60S 1/48

(54) **TANK MIT HEIZEINRICHTUNGEN IN EINEM KRAFTFAHRZEUG**

(30) Priorität: 09.10.2017 DE 102017009325; 27.10.2017 DE 102017010004
(71) Anmelder: Eichenauer Heizelemente GmbH & Co. KG, 76870 Kandel (DE)
(72) Erfinder: Wildegger, Christian, 67714 Waldfischbach (DE)
(74) Vertreter: Twelmeier Mommer & Partner

(57) **Zusammenfassung**

Beschrieben wird ein Tank (1) für ein Fahrzeug, mit einem Boden (3) und einer ersten Heizeinrichtung (2), wobei sich in einem angrenzenden Bereich der ersten Heizeinrichtung (2) eine Ansaugleitung (4) oder Auslassöffnung befindet, durch die Fluid aus dem Tank (1) entnommen werden kann, wobei sich im Tank (1) mindestens eine weitere Heizeinrichtung (8.1-8.4) befindet, die sich in einem Abstand vom Boden (3) in einem durch eine Trennwand abgeteilten Teilvolumen (7.1-7.4) befindet, das von dem restlichen Volumen so abgetrennt ist, dass ein eigener Sammelraum für aufgetautes Fluid geschaffen ist, und wobei die Trennwand (9.1-9.4) eine verschließbare Öffnung (16.1-16.4) in einem unteren Bereich des Sammelraumes aufweist, durch die sich Fluid aus dem Teilvolumen in ein darunterliegendes Teilvolumen ergießen kann. Erfindungsgemäß ist vorgesehen, dass die Trennwand (9.1-9.4) einen Rand hat, über den Flüssigkeit schwappen kann.

## Beschreibung

Die Erfindung betrifft einen Tank für ein Kraftfahrzeug, der mit mehreren Heizeinrichtungen versehen ist.

Ein heizbaren Behälter für ein Fluid in einem Kraftfahrzeug ist beispielsweise aus der EP 3 211 191 bekannt ist. Darin ist ein Behälter beschrieben, der zur Bevorratung von Wasser zur Wassereinspritzung in den Verbrennungstrakt dient. Da das Wasser in dem Behälter gefrieren kann, erfolgt eine Beheizung des Behälters derart, dass ein Flächenheizelement von außen in eine Tasche der Behälterwand eingebracht wird. Nachteilig ist die Beheizung der Behälterwand nicht dafür geeignet, auch große, voluminöse Behälter zu beheizen, da die Beheizung nur am Rande des Behälters erfolgt und daher das Eis im Inneren schlecht aufgetaut werden kann.

Eine wesentlich bessere Beheizung wird mit dem aus der DE 10 2011 108 213 A1 bekannten Tank erreicht, der mehrere Kammern enthält, die jeweils mit einer eigenen Heizvorrichtung versehen sind. Die einzelnen Kammern sind durch eine Rohrleitung mit einander verbunden. Nachteilig ist aber eine sehr aufwändige Fertigung.

Vor diesem Hintergrund besteht die Aufgabe der Erfindung deshalb darin, eine Heizeinrichtung zu schaffen, die mit geringem Fertigungsaufwand auch ein Auftauen des Eises im Inneren von großen, voluminösen Tanks besser ermöglicht.

Diese Aufgabe wird durch einen Tank mit den im Anspruch 1 angegebenen Merkmalen gelöst. Vorteilhafte Weiterbildungen der Erfindung sind Gegenstand von Unteransprüchen.

Beheizte Trenn- oder Innenwände im Inneren des Behälters ermöglichen das Auftauen von Eis auch in Bereichen, die einige Entfernung zur Außenwand haben und daher von einer beheizten Außenwand nicht mehr erreicht werden. Auch eine zentrale Heizeinheit in Bodennähe eines Behälters anstelle einer beheizten Außenwand kann diese Bereiche nicht erreichen. Vorteilhaft ist jedoch zu den beheizten Trenn- oder Innenwänden eine erste Heizung in Form einer beheizten Außenwand oder einer zentralen Heizeinheit vorhanden, die zumindest ein begrenztes Anfangsvolumen freischmilzt, damit schon zu Anfang ein Startvolumen im Bereich des Fördermodules zur Verfügung steht.

Trennwände, über die Flüssigkeit schwappen kann, lassen sich wesentlich einfacher herstellen als komplette Kammern in einem Tank. Mit einer oder mehreren solcher Trennwände lassen sich vorteilhaft Teilvolumen in dem Tank abgrenzen, in denen dann jeweils Flüssigkeit von einer dem betreffenden Teilvolumen zugeordneten Heizeinrichtung aufgetaut werden kann.

Erfindungsgemäß ist die wenigstens eine Trennwand so in dem Tank angeordnet, dass Flüssigkeit über einen Rand der Trennwand schwappen kann. Der mit vollständigen Kammern verbundene Fertigungsaufwand wird so vermieden. Indem Flüssigkeit über die Trennwand oder -falls mehrere Teilvolumina durch Trennwände abgeteilt sind- die Trennwände schwappt, ist ein Flüssigkeitsaustausch zwischen einem Teilvolumen und dem übrigen Tankvolumen gewährleistet. Die Trennwand kann dabei abschnittsweise an einer darüber angeordneten Trennwand oder einer Dachwand des Tanks befestigt sein, beispielsweise über einzelne Stege oder ein Gitter. Über den oberer Rand der Trennwand ist also auf besonders einfache Weise ein umfangreicher Austausch von Flüssigkeit mit dem übrigen Tankvolumen durch Schwappbewegungen möglich.

Die Trennwände können beispielsweise von einer Tankseitenwand abstehen und eine Schüssel bilden, in der Flüssigkeit aufgefangen wird. Die Trennwände können vorteilhaft Schwappwände bilden, die Schwappbewegungen im Fahrbetrieb auffangen und dabei einen Flüssigkeitsaustausch zwischen den durch die Trennwand abgeteilten Teilvolumen und dem übrigen Tankvolumen zulassen.

Zur Beheizung der Trennwände ist bevorzugt mindestens ein Heizelement, bevorzugt ein PTC-Heizelement im Inneren der Trennwand angeordnet. Durch die Anordnung im Inneren ist das Heizelement vor aggressivem oder korrosivem Fluid wie demineralisiertem Wasser geschützt. In einer anderen Ausgestaltung ist das Heizelement, beispielsweise ein Stanzgitter, in die Trennwand eingespritzt und so ebenfalls vor dem Fluid geschützt.

Die Trennwand kann integral mit der Außenwand, insbesondere einstückig mit der Behälterwand ausgeführt sein. Vorteilhaft sind dabei die Trennwände als Einstülpungen ausgeführt, die in den Innenraum des Behälters hineinragen. In diesem Falle ist es vorteilhaft, die Heizelemente an der Behälteraußenseite im Bereich einer Einstülpung anzuordnen, da dadurch die elektrischen Anschlüsse der Heizelemente nicht durch die Behälterwand geführt werden müssen und trotzdem das Heizelement weitgehend im Inneren des Behälters angeordnet ist.

Die Trennwände können jedoch auch lediglich an einer Behälterwand befestigt sein. Die Kontaktierung der Heizelemente kann dann beispielsweise einzeln durch abgedichtete Durchführungen in der Behälterwand erfolgen oder innerhalb des Behälters, oder auch mit dem Anschluss einer ersten Heizung, zusammengeführt werden und dann zentral durch die Behälterwand geführt werden. In einer vorteilhaften Weiterbildung können die Innenwände an einer weiteren, insbesondere benachbart zur Behälterwand angeordneten Wand angeordnet sein, in oder an der dann auch die Leitungsführung erfolgt.

In einer bevorzugten Ausgestaltung sind die Trennwände als sogenannte Schwappwände ausgeführt. Bevorzugt haben die Trennwände dabei einen Abschnitt, der sich schräg von unten nach oben erstreckt. Schwappwände in einem Behälter sollen zu hohe Schwappbewegungen im Fahrbetrieb auffangen oder im teilweise gefrorenen Zustand des Fluids verhindern, dass Eisstücke Beschädigungen verursachen. Sind die Schwappwände erfindungsgemäß darüber hinaus noch beheizt, so haben sie eine Doppelfunktion, wobei der Vorteil der Doppelfunktion über die beiden Einzelfunktionen hinausgeht, also ein zusätzlicher Synergieeffekt vorhanden ist, da das Schwappen von Flüssigkeit oder auch Eis gegen die Schwappwände den Wärmeaustausch mit dem Heizelement noch verbessert.

In einer vorteilhaften Weiterbildung ist die Höhe der Schwappwände größer als ihre Breite. Äußerst vorteilhaft erstrecken sich die Schwappwände sogar bis zum maximalen Fluidspiegel. Dabei kann das Heizelement selbst auch eine geringere Breite oder Höhe haben und der restliche Bereich der Schwappwand nur durch Wärmeleitung beheizt werden.

In ihrer Form sind die Schwappwände nicht begrenzt und können an die Behälterform angepasst werden. Um mit einer einzigen Schwappwand einen größeren Bereich beheizen zu können, ist die Schwappwand allerdings bevorzugt verzweigt ausgeführt.

Für Behälter, die eine größere Höhe als Breite haben, können die Trennwände von einer Behälterseitenwand abstehen. Die Trennwände sind in diesem Fall bevorzugt so ausgestaltet, dass sie alleine oder in Kombination mit der Behälterseitenwand ein Teilvolumen für das Fluid abgrenzen. Taut dann die Oberseite der Trennwand ein Teil des Eises im Teilvolumen auf, so wird das Fluid zunächst im Teilvolumen gesammelt und fließt nicht gleich ab. Somit wird ein Luftspalt zwischen Eis und Trennwand verhindert und weiteres Eis kann aufgetaut werden.

Um das aufgetaute Fluid dann nutzen zu können, ist im unteren Bereich, bevorzugt an der tiefsten Stelle des Teilvolumens, eine Öffnung vorhanden, über die das Teilvolumen entleert werden kann. Dazu schmilzt sich die Öffnung nach einer gewissen Zeit selbst frei, oder die Öffnung wird gesteuert freigegeben, beispielsweise durch ein Ventil. Denkbar wär z.B. auch ein gezieltes Freischmelzen durch ein weiteres Heizelement wie einen Heizdraht.

Bei sehr hohen Behältern ist es vorteilhaft, wenn mehrere Teilvolumen in Schwerkraftrichtung übereinander angeordnet sind. Dadurch entleert sich das obere Teilvolumen zunächst in das darunterliegende Teilvolumen und kann so zusätzlich Fluid zum Auffüllen eines Luftspaltes bereitstellen. Vorteilhaft kann auch das freigeschmolzene Fluid entlang der Trennwandunterseite das darunterliegende Teilvolumen auffüllen. Zur Optimierung der Auftauleistung kann sowohl die Beheizung der Trennwand als auch das Freigeben der Öffnung innerhalb eines Teilvolumens, bevorzugt aber in Bezug auf mehrere Teilvolumen zeitlich versetzt erfolgen.

In einer besonders vorteilhaften Ausführung kann zumindest ein Teilvolumen, äußerst bevorzugt das oberste Teilvolumen, durch zusätzliches, von oben eingebrachtes Fluid, z.B. in Form von aus dem Anfangsvolumen rückgeführtes Fluid, aufgefüllt werden.

Gerade bei großen Tanks kann durch eine einzige Heizeinrichtung, die im unteren Tankbereich in der Nähe einer Ansaugleitung oder Öffnung angeordnet ist, nicht das gefrorene Fluid im gesamten Tankbereich aufgeschmolzen werden. Tanks, in denen zusätzlich die zu einer ersten Heizeinrichtung mindestens eine weitere Heizeinrichtung in einem teilvolumenbildenden Bereichen angeordnet ist, ermöglichen dagegen das Auftauen von gefrorenem Fluid auch in Bereichen, die einige Entfernung zur ersten Heizeinrichtung haben und daher von der ersten Heizeinrichtung nicht mehr erreicht werden.

Vorteilhaft schmilzt jedoch die erste Heizeinrichtung zumindest ein begrenztes Anfangsvolumen frei, damit schon zu Anfang ein Startvolumen im Bereich einer Ansaugleitung oder Öffnung zur Verfügung steht und dadurch schnell Fluid aus dem Tank entnommen werden kann. Die Ansaugleitung oder Auslassöffnung kann dazu beispielsweise angrenzend an die erste Heizeinrichtung oder an anderer Stelle im Boden des Tanks vorgesehen sein.

In einer vorteilhaften Ausgestaltung sind weitere Heizeinrichtungen in teilvolumenbildenden Bereichen angeordnet, wobei eine Öffnung im unteren Bereich des Teilvolumens oberhalb des Tankbodens im Bereich der Ansaugleitung oder Abflussöffnung angeordnet ist. Dadurch ist erreicht, dass sich abfließendes Fluid aus dem teilvolumenbildenden Bereich um die Ansaugöffnung sammelt. Besonders vorteilhaft ist es, weitere Heizeinrichtungen mit teilvolumenbildenden Bereichen an den Tankseitenwänden beabstandet vom Tankboden anzuordnen.

Die teilvolumenbildenden Bereiche sind bevorzugt durch Trennwände geschaffen, innerhalb derer sich ein eigener Sammelraum für das aufgetaute Fluid ausbilden kann. Da das Fluid damit nicht abfließt, sondern den Bereich zwischen Heizeinrichtung und verbleibendem gefrorenen Fluid auffüllt, wird ein Luftspalt verhindert und weiteres gefrorenes Fluid kann, unterstützt von Schwappbewegungen während der Fahrt, aufgetaut werden.

Durch das Freigeben einer zunächst noch verschlossenen Öffnung im unteren, bevorzugt untersten, Bereich des Sammelraumes kann das aufgetaute Fluid letztendlich nach unten abfließen und dort einen weiteren entstandenen Luftspalt, z.B. im Bereich der Ansaugleitung, auffüllen.

Die Freigabe der Öffnung kann dabei durch unterschiedliche Methoden erreicht werden. So kann die Öffnung von selbst durch das schon aufgetaute, erwärmte Fluid oder aber durch eine eigene Freitauheizung, zum Beispiel in Form eines Heizdrahtes, freigeschmolzen werden. Denkbar wäre auch die Freigabe durch ein gesteuertes Ventil.

Die elektrischen Anschlussleitungen der Heizeinrichtungen in Bereich der Tankseitenwände sind bevorzugt direkt durch die Tankseitenwände aus dem Tank herausgeführt. Vorteilhaft sind die Anschlussleitungen dabei getrennt von den Anschlussleitungen der ersten Heizeinrichtung durch eigene Durchbrüche in der Tankseitenwand geführt.

In einer bevorzugten Weiterbildung kann eine oder beide Anschlussleitungen als Heizdraht so in oder an der Tankseitenwand geführt sein, dass bei Betrieb der Heizeinrichtung ein Verbindungskanal zwischen der Fluidoberfläche und der Ansaugleitung oder Öffnung freigeschmolzen wird.

Die Heizeinrichtung weist bevorzugt mindestens ein PTC-Element auf, das in oder an einem metallischen Wärmeleitkörper angeordnet ist. Denkbar wäre aber beispielsweise auch ein Stanzgitter. Zum Schutz vor aggressivem oder korrosivem Fluid wie demineralisiertem Wasser ist die Heizeinrichtung von einem Kunststoffmantel umgeben.

Die Anschlussleitungen für die Heizeinrichtung sind vorteilhaft durch den Kunststoffmantel und einen Durchbruch in der Tankseitenwand herausgeführt, wobei der Kunststoffmantel um die Anschlussleitungen dicht mit der Tankseitenwand rings um den Durchbruch verbunden, insbesondere verschweißt ist.

Äußerst vorteilhaft bildet der Kunststoffmantel teilweise, vorteilhaft vollständig die Trennwand, die das Teilvolumen vom übrigen Tankvolumen abgrenzt.

Weiterhin vorteilhaft ist der der Kunststoffmantel zweiteilig ausgeführt, wobei die beiden Teile dicht verbunden, bevorzugt verschweißt sind. Bei einer äußerst vorteilhaften Ausbildung bildet der eine Teil des Kunststoffmantels eine Aufnahmevertiefung für den Wärmeleitkörper, während der andere Teil als Deckel die Vertiefung verschließt und darüber hinaus noch die Trennwände ausbildet.

Bei einem hohen Tank ist es vorteilhaft, wenn mehrere Teilvolumen in Schwerkraftrichtung übereinander angeordnet sind. Dadurch entleert sich das obere Teilvolumen zunächst in das darunterliegende Teilvolumen und kann so zusätzlich Fluid zum Auffüllen eines Luftspaltes bereitstellen. Vorteilhaft kann auch das freigeschmolzene Fluid entlang der Trennwandunterseite das darunterliegende Teilvolumen auffüllen.

Zur Optimierung der Auftauleistung können die Heizeinrichtungen getrennt oder zeitlich versetzt betrieben. Aber auch das Freigeben der Öffnungen in Bezug auf die zugeordnete Heizeinrichtung oder aber in Bezug auf andere Teilvolumen kann zeitlich versetzt erfolgen.

In einer besonders vorteilhaften Ausführung kann zumindest ein Teilvolumen, äußerst bevorzugt das oberste Teilvolumen, durch zusätzliches, von oben eingebrachtes Fluid, z.B. in Form von aus dem Anfangsvolumen rückgeführtes Fluid, aufgefüllt werden.

Im gesamten Anmeldungstext beziehen sich Angaben wie "oben" oder "unten" auf die Einbaulage des Tanks im Betrieb in einem Fahrzeug.

Weitere Einzelheiten und Vorteile werden an Ausführungsbeispielen der Erfindung unter Bezugnahme auf die beigefügte Zeichnung erläutert, wobei die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen nicht nur in der jeweils angegebenen Kombination, sondern auch in anderen Kombinationen oder in Alleinstellung verwendbar sind, ohne den Rahmen der Erfindung zu verlassen. Gleiche und einander entsprechende Komponenten sind in den verschiedenen Figuren mit übereinstimmenden Bezugszahlen versehen. Es zeigen:
- Fig. 1: einen Schnitt durch einen schematisch dargestellten Tank mit Heizeinrichtungen in durch Trennwände abgeteilte Teilvolumen; und
- Fig. 2: einen Schnitt durch einen schematisch dargestellten Behälter mit durch Innenwände abgeteilte Teilvolumen

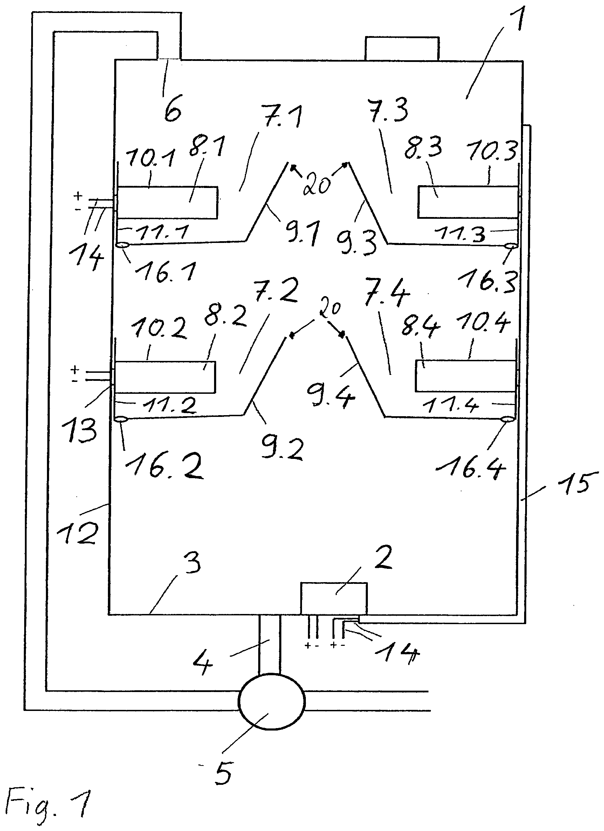

Fig. 1 zeigt schematisch ein erstes Ausführungsbeispiel der Erfindung. In Fig. 1 ist rein schematisch ein Tank 1 für demineralisiertes Wasser dargestellt, das in den Verbrennungstrakt eines Kraftfahrzeuges eingespritzt werden soll. Andere zu beheizende Flüssigkeiten in einem Kraftfahrzeug sind aber ebenso denkbar. Im Inneren am Boden 3 des Tanks 1 ist eine erste Heizeinrichtung 2 vorhanden. Im angrenzenden Bereich ist eine Ansaugleitung 4 vorhanden, durch die Wasser aus dem Tank 1 entnommen werden kann. Außerhalb des Tanks 1 ist eine Verzweigung 5 gezeigt, sodass es möglich ist, das entnommene, durch die Heizeinrichtung 2 angewärmte Wasser von oben durch eine Zuführöffnung 6 wieder zuzuführen, wobei die Zuführöffnung 6 oberhalb eines teilvolumenbildenden Bereiches 7.1 angeordnet ist. Bevorzugt ist es, die Ansaugleitung 4 mit Rückführabzweig 5 und die Heizeinrichtung 2 zusammen mit einer Pumpe und einem Filter auf einem gemeinsamen Bodenmodul anzuordnen (nicht gezeigt).

In der beispielhaften Ausgestaltung ist die Höhe des Tanks 1 größer als dessen Breite. Daher ist es schwierig, mit einer einzigen, am Boden 3 angeordneten Heizeinrichtung 2 das Fluid im gesamten Tank 1 aufzutauen. Der Tank 1 zeigt daher beispielhaft 4 weitere Heizeinrichtungen 8.1 - 8.4, die sich mit Abstand vom Boden 3 jeweils in einem durch eine Trennwand 9.1 - 9.4 abgeteilten Teilvolumen 7.1 - 7.4 befinden. Die Trennwände 9.1-9.4 haben jeweils einen oberen Rand 20, über den Flüssigkeit schwappen kann. Die Teilvolumen 9.1-9.4 können deshalb stets Flüssigkeit mit dem übrigen Tankvolumen austauschen. Zudem können die Trennwände als Schwappwände wirken, also starke Schwappbewegungen dämpfen und so die mechanische Belastung des Tanks 2 und darin angeordneter Komponenten reduzieren.

Die von der Tankseitenwand 12 abstehenden Trennwände 9.1 - 9.4 bilden nach oben offene Schüsseln. Diese Schüsseln können rund um einen zentralen Tankbereich herum angeordnet sein, der sich dem Tank durchgehend von unten nach oben erstreckt. Dabei können sich Schüsseln um den zentralen Tankbereich herum gegenüberliegend angeordnet sein. Möglich ist auch, dass die Schüsseln ringförmig sind und jeweils den zentralen Tankbereich umgeben.

Die Heizeinrichtungen 8.1 - 8.4 weisen dabei einen äußeren, zweigeteilten Kunststoffmantel auf. Der eine Teil des Kunststoffmantels 10.1 - 10.4 bildet eine Aufnahmevertiefung für den Wärmeleitkörper mit Heizelement (nicht gezeigt), während der andere Teil als Deckel 11.1 - 11.4 die Vertiefung verschließt und darüber hinaus noch die gesamte Trennwand 9.1 - 9.4 zur Abgrenzung des Teilvolumens ausbildet. In diesem Fall sind also Trennwand 9.1 - 9.4 und Deckel 11.1 - 11.4 einstückig ausgeführt. Denkbar ist aber auch, dass der Deckel 11.1 - 11.4 separat ausgeführt ist oder nur einen Teil der Trennwand 9.1 - 9.4 ausbildet. Die Trennwand 9.1 - 9.4 kann auch erst zusammen mit Tankseitenwand 12 einen teilvolumenbildenden Bereich 7.1 - 7.4 ausbilden. In der beispielhaften Ausführung ist die Trennwand 9.1 - 9.4 mit Deckel 11.1 - 11.4 an der Tankseitenwand 12 angebracht, insbesondere mit ihr verschweißt. Die Anschlussleitungen 14 der Heizeinrichtungen 8.1 - 8.4 sind durch einen Deckel 11.1 - 11.4 des Kunststoffmantel und einen Durchbruch (nicht gezeigt) in der Tankseitenwand 12 aus dem Tank 1 herausgeführt. Dabei sind sie innerhalb einer um den Durchbruch umlaufend dichten Verbindung 13, bevorzugt Schweißnaht, zwischen Tankseitenwand 12 und Deckel 11.1 - 11.4 nach außen geführt. Bei den beiden Heizeinrichtungen 8.3 und 8.4 auf der rechten Tankseite sind die Anschlussleitungen in einem Kanal 15 in oder an der Tankseitenwand 12 bis in den Bodenbereich 3 geführt. Alternativ, bevorzugt aber zusätzlich ist zumindest eine Anschlussleitung als Heizdraht ausgeführt. Bei wärmeleitender Verbindung zur Tankseitenwand ist es so möglich, einen Kanal von der Fluidoberfläche bis zum Bodenbereich 3 freizuschmelzen, wodurch vorteilhaft auch bei großteils noch gefrorenem Tankinhalt eine Gas- und Fluidverbindung geschaffen ist.

Nach Aktivierung von Heizeinrichtungen in einem zugefrorenen Tank entstehen durch abfließendes Fluid im Allgemeinen immer rasch Luftspalte zwischen den Heizeinrichtungen und dem Eis, was die weitere Wärmeübertragung auf das Eis erheblich erschwert. Nach Aktivierung der Heizeinrichtungen 8.1, 8.3 ist zunächst ein Bereich um die Heizeinrichtungen 8.1, 8.3 freigeschmolzen. Das geschmolzene Fluid fließt jedoch nicht ab, sondern sammelt sich im Teilvolumen 7.1, 7.3. Dadurch ist ein Entstehen eines Luftspalt 17 im Bereich der Heizeinrichtungen 8.1, 8.3 verhindert und weiteres Eis kann durch die Heizeinrichtungen 8.1, 8.3 aufgeschmolzen werden, wozu auch Schwappbewegungen im Tank 1 beitragen, die das Fluid mit dem verbliebenen Eis in Kontakt bringen.

An der tiefsten Stelle des abgetrennten Teilvolumens 7.1, 7.3 ist eine Öffnung 16.1, 16.3 vorhanden, die in der beispielhaften Ausführung nach einiger Zeit von selbst durch die Heizeinrichtung 8.1, 8.3 und das angewärmte Wasser aufgeschmolzen wird und dann das im Teilvolumen 7.1, 7.3 befindliche Wasser nach unten abfließen lässt. Sind nun im darunterliegenden Teilvolumen 7.2, 7.4 die Heizeinrichtungen 8.2, 8.4 bevorzugt zeitlich versetzt zu den oberen Heizeinrichtungen 8.1, 8.3 ebenfalls eingeschaltet, so kann durch das von oben zufließende Fluid ein Luftspalt um die Heizeinrichtungen 8.2, 8.4 verhindert werden. Nach dem Freischmelzen der Öffnung 16.2, 16.4 kann das Fluid dann zum Boden 3 hin abfließen und einen eventuellen Luftspalt um das erste Heizelement 2 und die Ansaugleitung 4 auffüllen. Dadurch ist sichergestellt, dass immer Fluid zum Entnehmen aus dem Tank 1 zur Verfügung steht und nach und nach das gesamte Eis im Tank 1 aufgeschmolzen wird.

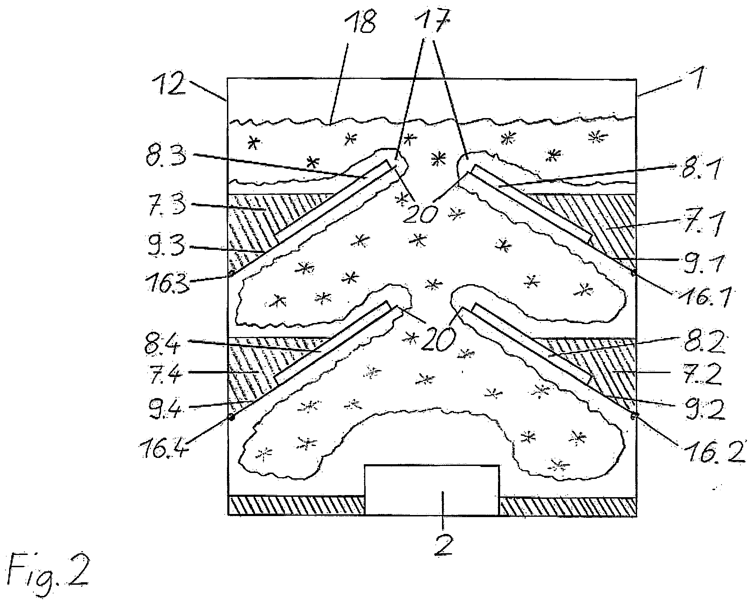

Fig. 2 zeigt schematisch ein weiteres Ausführungsbeispiel der Erfindung. In Fig. 2 ist ein Tank 1 für demineralisiertes Wasser oder eine andere Flüssigkeit 18. Im Inneren am Boden 3 des Tanks 1 ist ein zentrales Fördermodul 2 vorhanden. Über das Fördermodul 2 wird das Wasser aus dem Tank 1 entnommen und dem Verbrennungstrakt eines Motors zugeführt. Das Fördermodul 2 kann unter anderem ein erstes Heizelement aufweisen, das das Eis in einem zentralen Bereich des Tanks 1 und in einer Förderleitung auftauen kann.

Bei dem gezeigten Ausführungsbeispiel ist die maximale Höhe des Tanks 1 größer als dessen maximale Breite. Damit auch Flüssigkeit 18 in größerem Abstand von der ersten Heizeinrichtung am Boden 3 aufgetaut werden kann, sind Trennwände 9.1-9.4 an den Seitenwänden 12 des Tanks 1 angeordnet. Die Trennwände 9.1-9.4 sind dabei so ausgestaltet, dass sie ein Teilvolumen des Fluids beinhalten können. Das Teilvolumen ist dabei durch die Tankaußenwand und eine Trennwand begrenzt. Dazu kann die Trennwand umlaufend um die gesamte Behälterinnenseite ausgeführt sein, oder nach oben gerichtete Trennwandabschnitte begrenzen das Volumen zu beiden Seiten.

Nach Aktivierung von Heizelementen in einem zugefrorenen Tank entstehen durch abfließendes Fluid im Allgemeinen immer rasch Luftspalte zwischen den Heizelementen und dem Eis, was die weitere Wärmeübertragung auf das Eis erheblich erschwert. Nach Aktivierung der Heizeinrichtungen 8.1, 8.3 ist zunächst ein Bereich um die Trennwand 9.1, 9.3 freigeschmolzen. Das geschmolzene Fluid aus dem Bereich oberhalb der Trennwand fließt jedoch nicht ab, sondern sammelt sich im Teilvolumen 7.1, 7.3. Dadurch ist zum Teil ein Luftspalt 17 über der Trennwand 9.1, 9.3 und dem Eis verhindert und weiteres Eis kann durch eine Heizeinrichtung 8.1, 8.3 aufgeschmolzen werden, wozu auch Schwappbewegungen im Behälter 1 beitragen, die das Fluid mit dem Eis in Kontakt bringen. Unterhalb der Trennwand 9.1, 9.3 dagegen wird nur ein kleiner Teil aufgeschmolzen, da hier durch das ablaufende Fluid rasch ein Luftspalt 17 entsteht.

An der tiefsten Stelle des abgetrennten Teilvolumens 7.1, 7.3 ist eine Öffnung 9.1, 9.3 vorhanden, die in der beispielhaften Ausführung nach einiger Zeit von selbst durch die Heizeinrichtung 8.1, 8.3 und das verflüssigte Eis aufgeschmolzen wird und dann das aufgeschmolzene Fluid nach unten abfließen lässt. Sind nun im darunterliegenden Teilvolumen 7.2, 7.4 die Heizeinrichtungen 8.2, 8.4 bevorzugt zeitlich versetzt zu den oberen Heizeinrichtungen 8.1, 8.3 ebenfalls eingeschaltet, so kann durch das von oben zufließende Fluid zunächst der Luftspalt 17 oberhalb, nach dem Freischmelzen der Öffnung 9.2, 9.4 auch der Luftspalt 17 unterhalb der Trennwände 9.2, 9.4 rasch aufgefüllt werden. Dadurch ist es ermöglicht, weiteres Eis aufzuschmelzen und so nach und nach das gesamte Eis im Behälter aufzuschmelzen.

Beim Fahrbetrieb kann durch die Trägheit des Fluides oder des teilweise vorhandenen Eises grundsätzlich eine energiereiche Schwappbewegung entstehen, die zu Schäden im Tank 1 führen kann. Die Trennwände 9.1-9.4 verhindern dies, indem sie als Schwappwände Schwappbewegungen behindern und dabei einen Flüssigkeitsaustausch zwischen dem durch die Trennwand 9.1-9.4 abgeteilten Teilvolumen und dem übrigen Tankvolumen zulassen.

Im Inneren der Trennwände 9.1-9.4 können Heizeinrichtungen mit in oder an Wärmeleiteinrichtungen angeordneten PTC-Heizelementen angeordnet. Dabei sind die PTC-Heizelemente durch die Trennwände vor dem Kontakt mit dem Fluid geschützt, wobei die Trennwände bevorzugt als Kunststoffumspritzung der Heizelemente realisiert sind. In einer vorteilhaften Weiterbildung ist lediglich im Bereich der Anschlüsse eine Durchführungsöffnung in der Schwappwand vorhanden, die mit einer Durchführungsöffnung im Behälterboden korrespondiert und mit dieser dicht verschweißt ist. Dadurch sind die Anschlüsse abgedichtet aus dem Behälter 1 herausgeführt. Äußerst bevorzugt können dem Basiskunststoff Zusätze beigefügt sein, die die Wärmeleitfähigkeit erhöhen. Dadurch kann die in den Heizelementen erzeugte Wärme besser über die gesamte Schwappwandoberfläche auf das Fluid übertragen werden.

**Bezugszeichenliste**

| | | | |
|---|---|---|---|
| 1 | Tank | 16.3 | Öffnung |
| 2 | Fördermodul | 16.4 | Öffnung |
| 3 | Boden | 17 | Luftspalt |
| 4 | Ansaugleitung | 18 | Flüssigkeit |
| 5 | Verzweigung | 19 | |
| 6 | Zuführöffnung | 20 | Rand |
| 7.1 | Teilvolumen | | |
| 7.2 | Teilvolumen | | |
| 7.3 | Teilvolumen | | |
| 7.4 | Teilvolumen | | |
| 8.1 | Heizeinrichtung | | |
| 8.2 | Heizeinrichtung | | |
| 8.3 | Heizeinrichtung | | |
| 8.4 | Heizeinrichtung | | |
| 9.1 | Trennwand | | |
| 9.2 | Trennwand | | |
| 9.3 | Trennwand | | |
| 9.4 | Trennwand | | |
| 10.1 | Kunststoffmantel | | |
| 10.2 | Kunststoffmantel | | |
| 10.3 | Kunststoffmantel | | |
| 10.4 | Kunststoffmantel | | |
| 11.1 | Deckel | | |
| 11.2 | Deckel | | |
| 11.3 | Deckel | | |
| 11.4 | Deckel | | |
| 12 | Tankseitenwand | | |
| 13 | Verbindung | | |
| 14 | Anschlussleitung | | |
| 15 | Kanal | | |
| 16.1 | Öffnung | | |
| 16.2 | Öffnung | | |

## Patentansprüche

1. Tank (1) für ein Fahrzeug, mit
einem Boden (3) und
einer ersten Heizeinrichtung (2),
wobei sich in einem angrenzenden Bereich der ersten Heizeinrichtung (2) eine Ansaugleitung (4) oder Auslassöffnung befindet, durch die Fluid aus dem Tank (1) entnommen werden kann,
wobei sich im Tank (1) mindestens eine weitere Heizeinrichtung (8.1-8.4) befindet, die sich in einem Abstand vom Boden (3) in einem durch eine Trennwand abgeteilten Teilvolumen (7.1-7.4) befindet, das von dem restlichen Volumen so abgetrennt ist, dass ein eigener Sammelraum für aufgetautes Fluid geschaffen ist, und
wobei die Trennwand (9.1-9.4) eine verschließbare Öffnung (16.1-16.4) in einem unteren Bereich des Sammelraumes aufweist, durch die sich Fluid aus dem Teilvolumen in ein darunterliegendes Teil- oder Restvolumen ergießen kann,
**dadurch gekennzeichnet, dass**
die Trennwand (9.1-9.4) einen Rand (20) hat, über den Fluid schwappen kann.

2. Tank (1) nach Anspruch 1, **dadurch gekennzeichnet, dass** die Trennwand (9.1-9.4) von einer Tankseitenwand (12) absteht und eine nach oben offene Schüssel bildet.

3. Tank (1) nach einem der vorstehenden Ansprüche, **dadurch gekennzeichnet, dass** von der Tankseitenwand (12) mehrere Trennwände (9.1-9.4) abstehen, die mehrere Teilvolumen (7.1-7.4) von dem restlichen Tankvolumen so abtrennen, dass diese Teilvolumen (7.1-7.4) jeweils einen Sammelraum für aufgetautes Fluid bilden, wobei mehrere dieser Teilvolumen (7.1-7.4), denen jeweils eine Heizeinrichtung (8.1-8.4) zugeordnet ist, übereinander angeordnet sind, und wobei die Trennwände (9.1-9.4) jeweils eine verschließbare Öffnung (16.1-16.4) in einem unteren Bereich des Sammelraumes aufweisen, durch die sich Flüssigkeit in ein darunterliegendes Teilvolumen ergießen kann.

4. Tank (1) nach Anspruch 3, **dadurch gekennzeichnet, dass** die Trennwände (9.1-9.4) jeweils einen oberen Rand (20) haben, über den Flüssigkeit schwappen kann, wobei sich die oberen Ränder (20) jeweils um einen zentralen Tankbereich herum erstrecken, der sich in dem Tank durchgehend von unten nach oben erstreckt.

5. Tank (1) nach einem der vorstehenden Ansprüche, **dadurch gekennzeichnet, dass** die Trennwand (9.1-9.4) einen Abschnitt aufweist, der sich schräg von unten nach oben erstreckt.

6. Tank (1) nach einem der vorstehenden Ansprüche, **dadurch gekennzeichnet, dass** die Trennwand (9.1-9.4) eine Schwappwand bildet, die Schwappbewegungen im Fahrbetrieb auffängt und dabei einen Flüssigkeitsaustausch zwischen dem durch die Trennwand (9.1-9.4) abgeteilten Teilvolumen und dem übrigen Tankvolumen zulässt.

7. Tank (1) nach einem der vorstehenden Ansprüche, **dadurch gekennzeichnet, dass** die weitere Heizeinrichtung in der Trennwand (9.1-9.4) angeordnet ist.

8. Tank (1) nach Anspruch 7, **dadurch gekennzeichnet, dass** die Trennwand (9.1-9.4) als eine Einstülpung der Behälteraußenwand (12) ausgebildet ist.

9. Tank (1) nach einem der vorstehenden Ansprüche, **dadurch gekennzeichnet, dass** die elektrischen Anschlussleitungen (14) für die mindestens eine weitere Heizeinrichtung (8.1-8.4) durch die Tankseitenwand (12) aus dem Tank (1) herausgeführt werden.

10. Tank (1) nach einem der vorstehenden Ansprüche, **dadurch gekennzeichnet, dass** zumindest eine der Anschlussleitungen (14) der mind. einen weiteren Heizeinrichtung (8.1-8.4) als Heizdraht in oder an der Tankseitenwand (12) so geführt ist, dass bei Betrieb der Heizeinrichtung (8.1-8.4) ein Verbindungskanal zwischen der Fluidoberfläche und der Ansaugleitung (4) bzw. Abflussöffnung freigeschmolzen wird.

11. Tank (1) nach mindestens einem der vorangehenden Ansprüche, **dadurch gekennzeichnet, dass** die Heizeinrichtung (8.1-8.4) mindestens ein PTC-Element aufweist, das in oder an einem metallischen Wärmeleitelement angeordnet ist, wobei das Wärmeleitelement von einem Kunststoffmantel (10.1-10.4, 11.1-11.4) umgeben ist.

12. Tank (1) nach Anspruch 11, **dadurch gekennzeichnet, dass** die Anschlussleitungen (14) durch den Kunststoffmantel (10.1-10.4, 11.1-11.4) und einen Durchbruch in der Tankseitenwand (12) aus dem Tank (1) herausgeführt werden, wobei der Kunststoffmantel (10.1-10.4, 11.1-11.4) und die Tankseitenwand (12) eine umlaufend dichte Verbindung (13), insbesondere Schweißverbindung, um die Anschlussleitungen (14) und den Durchbruch aufweisen.

13. Tank (1) nach Anspruch 11 oder 12, **dadurch gekennzeichnet, dass** der Kunststoffmantel (10.1-10.4, 11.1-11.4) zumindest teilweise, bevorzugt vollständig die Trennwand (9.1-9.4) bildet.

14. Tank (1) nach einem der Ansprüche 11 bis 13, **dadurch gekennzeichnet, dass** der Kunststoffmantel (10.1-10.4, 11.1-11.4) zweiteilig ausgeführt ist und die beiden Teile dicht verbunden, bevorzugt verschweißt sind.

15. Tank (1) nach einem der vorstehenden Ansprüche, **dadurch gekennzeichnet, dass** die Trennwand (9.1-9.4) eine aufstehende Trennwand ist.
